(19) Europäisches Patentamt / European Patent Office / Office européen des brevets

(11) **EP 1 794 021 B1**

(12) **EUROPÄISCHE PATENTSCHRIFT**

(45) Veröffentlichungstag und Bekanntmachung des Hinweises auf die Patenterteilung:
**25.11.2009 Patentblatt 2009/48**

(51) Int Cl.:
***B60K 35/00*** *(2006.01)*

(21) Anmeldenummer: 05785244.4

(22) Anmeldetag: **12.09.2005**

(86) Internationale Anmeldenummer:
**PCT/EP2005/009770**

(87) Internationale Veröffentlichungsnummer:
**WO 2006/032387 (30.03.2006 Gazette 2006/13)**

(54) **BEDIENELEMENT FÜR EIN KRAFTFAHRZEUG**

OPERATING ELEMENT FOR A MOTOR VEHICLE

ELEMENT DE COMMANDE DESTINE A UN VEHICULE

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **22.09.2004 DE 102004045885**

(43) Veröffentlichungstag der Anmeldung:
**13.06.2007 Patentblatt 2007/24**

(73) Patentinhaber: **Volkswagen Aktiengesellschaft 38436 Wolfsburg (DE)**

(72) Erfinder:
 • **HOBIK, Peter**
 **38468 Ehra-Lessien (DE)**
 • **VAN GERPEN, Dieter**
 **38154 Königslutter (DE)**
 • **SPECKS, Will**
 **38440 Wolfsburg (DE)**
 • **WEGNER, Berend**
 **38446 Wolfsburg (DE)**
 • **VON JAN, Tycho**
 **38518 Gifhorn (DE)**
 • **MÜNKNER, Peter**
 **38114 Braunschweig (DE)**
 • **WENGELNIK, Heino**
 **38442 Wolfsburg (DE)**
 • **BOHRER, Lorenz**
 **10623 Berlin (DE)**
 • **WALTER, Helmut**
 **38162 Weddel (DE)**

(56) Entgegenhaltungen:
 **EP-A- 1 406 160     DE-A1- 10 015 726**

 • **PATENT ABSTRACTS OF JAPAN Bd. 1996, Nr. 03, 29. März 1996 (1996-03-29) -& JP 07 306055 A (NILES PARTS CO LTD), 21. November 1995 (1995-11-21)**

**EP 1 794 021 B1**

**Beschreibung**

Die Erfindung betrifft ein Bedienelement für ein Kraftfahrzeug zur Bedienung einer Funktion des Kraftfahrzeuges, insbesondere durch Drücken auf das Bedienelement, Berühren des Bedienelementes, Drehen des Bedienelementes und/oder Ziehen des Bedienelementes, wobei dem Bedienelement eine Beleuchtungsvorrichtung zur Beleuchtung des Bedienelementes zugeordnet ist.

Mit zunehmenden Funktionalitäten eines Kraftfahrzeuges stellt sich die Aufgabe, Anzeigen und Bedienelemente für verschiedene Funktionen so zu gestalten, dass diese für einen Fahrer eines Kraftfahrzeuges besonders einfach zu erkennen bzw. zu bedienen sind.

Aus dem Stand der Technik sind verschiedene Lösungen dieses Problems bekannt. So ist z.B. gemäß der WO 00/21795 vorgesehen, ein Display- oder Anzeigefeld mehrteilig auszubilden, wobei ein Teil des Anzeigefeldes ein Informations-Panel darstellt, auf welchem Informationen des ausgewählten Menüs bzw. der ausgewählten Funktion sowie gegebenenfalls wichtige Informationen anderer Funktionsgruppen wiedergegeben werden. Auf dem restlichen Teil des Anzeigefeldes werden Funktions- und/oder Statusanzeigen sinnfällig derart generiert, dass sie jeweils einem Bedienelement zugewiesen sind und zwar vorzugsweise dem Bedienelement, dem in diesem Auswahlmenü die jeweilige Funktion zur Bedienung zugewiesen ist. Zudem ist eine der im verbleibenden Displayfeld angezeigten und einem der Bedienelemente zugewiesenen Funktionen eine Rückkehrfunktion in ein übergeordnetes Menü zugeordnet.

Aus der DE 101 39 693 A1 ist ein Drehknopf bekannt. Gemäß der DE 101 39 693 A1 sind bei modernen elektronischen Einrichtungen im Fahrzeug, die ständig zusätzliche Funktionen mit immer mehr Optionen anböten, wegen der Begrenzung des Bauraumes für die dazugehörigen Bedienelemente Multifunktions-Bedienelemente geschaffen worden, mittels derer verschiedene Funktionen der angeschlossenen Einrichtungen bedienbar sind. So sei beispielsweise aus der EP 0 366 132 B1 eine Multifunktions-Bedieneinrichtung für Kraftfahrzeuge bekannt, bei der die Auswahl von Funktionsgruppen und die Auswahl individueller Funktionen mittels eines Drehschalters erfolgt, und bei der eine ENTER-Funktion auslösbar ist, wobei ein und derselbe bidirektionale Drehschalter zur Menü-Auswahl und individuellen Funktionsauswahl dient. Dieser Drehschalter weist dabei Raststellungen auf, denen Menüs oder einzelne Funktionen zugeordnet sind, wobei die ENTER-Funktion durch eine Axialbewegung des Drehschalters auslösbar ist. Es dient eine solche Multifunktions-Bedieneinrichtung beispielsweise zur Zieleingabe eines Navigationssystems. Es wird hierzu auf einer Anzeigeeinheit eine alphanumerische Tastatur abgebildet, in der sich der Benutzer mittels der bidirektionalen Bewegung des Drehschalters vor- und zurückbewegen kann. Wenn dann der Cursor sich auf dem gewünschten alphanumerischen Zeichen befindet, kann dieses durch eine Axialbewegung des Drehschalters ausgewählt und in das Navigationssystem übernommen werden. Des Weiteren ist aus der DE 199 41 960 A1 bekannt, ein Bedienelement als bidirektional um seine Längsachse rotierbaren Zylinder auszubilden, der federnd zur Längsachse bewegbar ist.

Zur komfortablen Bedienung und zur Vereinfachung der Haptik der Bedienung wird in der DE 101 39 693 A1 vorgeschlagen, dass ein bidirektionales Drehelement mit einer im Wesentlichen parallel zu einer Fahrzeugteil-Oberfläche verlaufenden Drehachse ausgebildet ist. Mit Hilfe des bidirektionalen Drehelementes erfolgt dabei eine bidirektionale An- und/oder Auswahl von Funktionsgruppen und/oder Funktionen innerhalb einer Menüebene. Die Auswahl der Menüebenen erfolgt über eine zweite Bedieneinrichtung. Dabei kann die zweite Bedieneinrichtung durch Verschiebung des bidirektionalen Drehelementes parallel zur Drehachse des bidirektionalen Drehelementes realisiert werden. Eine weitere Variante sieht vor, das bidirektionale Drehelement zur Bildung der zweiten Bedieneinrichtung in Richtung der Drehachse als Wippe auszubilden. Eine andere Lösung sieht vor, dass eine zweite Bedieneinrichtung vorgesehen ist, welche zwei Bedienelemente aufweist, die vorzugsweise parallel zur Drehachse des bidirektionalen Drehelementes betätigbar sind. Die zweite Bedieneinrichtung ist am oder zumindest teilweise im bidirektionalen Drehelement angeordnet und bildet mit dem Drehelement eine bauliche Einheit. Zudem ist das bidirektionale Drehelement zur An- und/oder Auswahl in zwei Richtungen auf der Anzeigeeinrichtung und die zweite Bedieneinrichtung zur Auswahl in zwei weiteren Richtungen, vorzugsweise senkrecht zu den Auswahlrichtungen des bidirektionalen Drehelementes, ausgebildet.

Die DE 100 15 726 A1 offenbart ein Fahrassistenzsystem mit einer Bildschirmanzeige an dem Anzeigesteuergerät und mit mindestens einem Bedienelement, in das ein Näherungsschalter mit einem kapazitiven Element und eine Schalteransteuerung integriert ist. Das Bedienelement dient der Betätigung einer diesem Bedienelement zugeordneten Funktion. Das Fahrassistenzsystem umfasst zudem einen Datenbus zum Austausch von Informationen, wobei das Anzeigesteuergerät und jedes der Bedienelemente an einen gemeinsamen Datenbus angeschlossen sind, wobei jedes der Bedienelemente bei seiner Berührung auf der Bildschirmanzeige eine Anzeige auslöst, die einem Fahrer Informationen zu dem betreffenden Bedienelement und der zugeordneten Funktion übermittelt.

Die EP 1 406 160 A2 offenbart eine Anzeigeeinrichtung für Informationen mit einem Bildschirm und einem multifunktionalen Schalter sowie einem Infrarotsensor zur Erkennung, ob sich die Hand eines Bedieners in der Nähe des Multifunktionsschalters befindet. Eine Annäherung an den Multifunktionsschalter löst dabei die Anzeige eines bestimmten Menüs aus.

Aus der DE 31 04 384 A1 ist zudem ein Schalter einer elektrischen Einheit mit Anzeigen bekannt, bei dem eine Zähleinrichtung den durch Handbetätigung eines frei zugänglichen Drehknopfes verursachten Schaltzustand aufnimmt und entsprechend dem Zählerstand einem ortsfesten, elektronisch arbeitend ausgebildeten Anzeigefeld zuführt, wobei das Anzeigefeld und der Drehknopf dicht beieinander angeordnet sind und ein von einer den Drehknopf tragenden Schaltwelle betätigter Schaltkontakt mit der Zähleinrichtung zusammenwirkt. Dabei ist es möglich, Drehknopf und Anzeige gleichzeitig zu betrachten, weil das elektronische Anzeigefeld in den Drehknopf an dessen Front- Stirnseite eingebaut ist, wobei es von einem den Drehknopf nach hinten in Achsrichtung überragenden Verbindungsstück getragen ist und die Front-Stirnseite des Drehknopfes im wesentlichen rundum durchsichtig ist.

Aus der EP 0 329 920 A1 ist zudem ein Tastschalter mit einem Gehäuse und einem axial in diesem verschiebbar gelagerten Schaltteil bekannt. Eine als Betätigungsorgan dienende Tastkappe weist ein Basisteil mit einem rohrförmigen, am Schaltteil verrasteten Fortsatz und eine wegnehmbare, mindestens zum Teil lichtdurchlässige Schutzkappe, auf. In einem vom Basisteil und der Schutzkappe begrenzten Hohlraum ist ein LED- oder LCD-Anzeigeelement mit mindestens einer Leuchtdiode und/oder einer Flüssigkristall-Sichtanzeige angeordnet, wobei das LED- oder LCD-Anzeigeelement im wesentlichen durch ein zur Verschieberichtung der Tastkappen rechtwinkliges Plättchen gebildet und noch mit elektrischen Anschlüssen versehen ist.

Ein Drehknopf ist zudem aus der EP 0 771 681 A2 bekannt.

Es ist Aufgabe der Erfindung, die Bedienung eines Kraftfahrzeuges zu verbessern.

Vorgenannte Aufgabe wird durch ein Bedienelement für ein Kraftfahrzeug zur Bedienung einer Funktion des Kraftfahrzeuges, insbesondere durch Drücken auf das Bedienelement, Berühren des Bedienelementes, Drehen des Bedienelementes und/oder Ziehen des Bedienelementes, gelöst, wobei dem Bedienelement eine Beleuchtungsvorrichtung zur Beleuchtung des Bedienelementes, ein Annäherungssensor zur Erkennung einer Annäherung eines Bedieners des Bedienelementes, insbesondere an das Bedienelement bzw. den Annäherungssensor, und eine Beleuchtungssteuerung zur Einstellung der Beleuchtung des Bedienelementes in Abhängigkeit eines Ausgangssignals des Annäherungssensors zugeordnet sind.

In vorteilhafter Ausgestaltung der Erfindung ist die Beleuchtungsvorrichtung mittels der Beleuchtungssteuerung dadurch einschaltbar, dass ein Abstand zwischen dem Annäherungssensor und einem Bediener einen Abstandsgrenzwert unterschreitet. Vergrößert sich der Abstand zwischen dem Annäherungssensor und dem Bediener auf mehr als den Abstandsgrenzwert, so ist in weiterhin vorteilhafter Ausgestaltung der Erfindung vorgesehen dass die Beleuchtungsvorrichtung ausgeschaltet wird. Dies erfolgt vorteilhafterweise erst nach Ablauf einer Wartezeit, die vorteilhafterweise zwischen 1s und 10s liegt.

In weiterhin vorteilhafter Ausgestaltung der Erfindung ist die Beleuchtungsvorrichtung mittels der Beleuchtungssteuerung in Sinne einer erhöhten Lichtabstrahlung dadurch einstellbar, dass ein Abstand zwischen dem Annäherungssensor und einem Bediener einen Abstandsgrenzwert unterschreitet. So kann vorgesehen sein, dass die Beleuchtungsvorrichtung, z.B. bei eingeschaltetem Licht; schwach leuchtet. Nähert sich ein Bediener dem Annäherungssensor so nah, dass der Abstandsgrenzwert unterschritten wird, so kann vorgesehen sein, dass die Beleuchtungsvorrichtung - durch entsprechende Ansteuerung mittels der Beleuchtungssteuerung - heller leuchtet. Vergrößert sich der Abstand zwischen dem Annäherungssensor und dem Bediener auf mehr als den Abstandsgrenzwert, so ist in weiterhin vorteilhafter Ausgestaltung der Erfindung vorgesehen, dass die Beteuchtungsvorrichtung auf ihre vorherige reduzierte Lichtabgabe eingestellt wird. Dies erfolgt vorteilhafterweise erst nach Ablauf einer Wartezeit, die vorteilhafterweise zwischen 1 s und 10s liegt.

In weiterhin vorteilhafter Ausgestaltung der Erfindung ist die Beleuchtungsvorrichtung mittels der Beleuchtungssteuerung derart einstellbar, dass sich die Lichtabstrahlung, insbesondere im wesentlichen kontinuierlich oder teilweise kontinuierlich, in Abhängigkeit des Abstandes zwischen einem Bediener und dem Annäherungssensor ändert. Dies erfolgt vorteilhafterweise nur, wenn dieser Abstand den Abstandsgrenzwert unterschreitet.

Es kann z.B. vorgesehen sein, dass die Leistung PL des von der Beleuchtungsvorrichtung abgegebenen Lichtes entsprechend den Zusammenhängen

$$PL \approx \left(PL\max - PL\min\right)\cdot\left(\frac{dG-d}{dG}\right) + PL\min, \textit{für } 0 \le d \le dG$$

$PL = PL\min, \textit{für } d > dG$

eingestellt werden kann, wobei d der Abstand zwischen einem Bediener und dem Annäherungssensor, dG der Abstandsgrenzwert, PLmax die Leistung des von der Beleuchtungsvorrichtung maximal abgegebenen Lichtes und PLmin ein Wert entsprechend dem Zusammenhang

$0 \le PL\min < PL\max$

ist.

Es kann z.B. auch vorgesehen sein, dass die Leistung PL des von der Beleuchtungsvorrichtung abgegebenen Lichtes entsprechend den Zusammenhängen

**3**

$$PL \approx \left(PL\max - PL\min\right) \cdot \left(\frac{dG - d}{dG}\right) + PL\min, \textit{für } 0 \le d \le dG$$

$PL = 0$, für $d > dG$

eingestellt werden kann.

In weiterhin vorteilhafter Ausgestaltung der Erfindung beträgt der Abstandsgrenzwert im wesentlichen zwischen 5cm und 15cm, insbesondere zwischen 10cm und 15cm.

In weiterhin vorteilhafter Ausgestaltung der Erfindung umfasst das Bedienelement einen Drehknopf, einen Taster, einen Fensterheber, einen Türentriegeler, einen Türgriff, einen Sicherheitsgurtentriegeler, ein Sicherheitsgurtschloss, ein Pedal, einen Schalthebel, einen Schalter, eine einstellbare Luftauslassdüse und/oder ein Zündschloss.

Vorgenannte Aufgabe wird zudem durch ein Kraftfahrzeug mit einem vorgenannten Bedienelement zur Bedienung einer Funktion des Kraftfahrzeuges, insbesondere durch Drücken auf das Bedienelement, Berühren des Bedienelementes, Drehen des Bedienelementes und/oder Ziehen des Bedienelementes, gelöst, wobei dem Bedienelement eine Beleuchtungsvorrichtung zur Beleuchtung des Bedienelementes, ein Annäherungssensor zur Erkennung einer Annäherung eines Bedieners des Bedienelementes und eine Beleuchtungssteuerung zur Einstellung der Beleuchtung des Bedienelementes in Abhängigkeit eines Ausgangssignals des Annäherungssensors zugeordnet sind.

In vorteilhafter Ausgestaltung der Erfindung ist die Beleuchtungsvorrichtung mittels der Beleuchtungssteuerung in Abhängigkeit eines Betriebszustandes des Kraftfahrzeuges steuerbar.

In weiterhin vorteilhafter Ausgestaltung der Erfindung ist die Beleuchtungsvorrichtung nur dann entsprechend vorherigen Ausführungen ansteuerbar, wenn, insbesondere aufgrund des aktuellen Betriebszustandes des Kraftfahrzeuges, eine Bedienung des Bedienelementes zugelassen ist.

In weiterhin vorteilhafter Ausgestaltung der Erfindung ist mittels der Beleuchtungsvorrichtung in Abhängigkeit eines Betriebszustandes des Kraftfahrzeuges Licht in zumindest zwei unterschiedlichen Farben erzeugbar.

In weiterhin vorteilhafter Ausgestaltung der Erfindung umfasst das Kraftfahrzeug eine Hinweisbeleuchtung zur Deutung auf das Bedienelement und einen der Hinweisbeleuchtung zugeordneten Annäherungssensor zur Erkennung einer Annäherung eines Bedieners an die Hinweisbeleuchtung, wobei die Hinweisbeleuchtung, insbesondere mittels der Beleuchtungssteuerung oder einer weiteren Beleuchtungssteuerung, in Abhängigkeit eines Ausgangssignals des der Hinweisbeleuchtung zugeordneten Annäherungssensors steuerbar ist.

In weiterhin vorteilhafter Ausgestaltung der Erfindung ist die Hinweisbeleuchtung oder ein Teil der Hinweisbeleuchtung mehr als in etwa 10cm von dem Bedienelement entfernt angeordnet.

In weiterhin vorteilhafter Ausgestaltung der Erfindung ist der der Hinweisbeleuchtung zugeordnete Annäherungssensor mehr als in etwa 10cm von dem Bedienelement entfernt angeordnet.

Abstrahlen von Licht im Sinne der Erfindung soll auch blinkendes Licht umfassen.

Kraftfahrzeug im Sinne der Erfindung ist insbesondere ein individuell im Straßenverkehr benutzbares Landfahrzeug. Kraftfahrzeuge im Sinne der Erfindung sind insbesondere nicht auf Landfahrzeuge mit Verbrennungsmotor beschränkt.

Weitere Vorteile und Einzelheiten ergeben sich aus der nachfolgenden Beschreibung von Ausführungsbeispielen. Dabei zeigen:

Fig. 1   ein Ausführungsbeispiel eines Kraftfahrzeuges in einer Innenansicht,

Fig. 2   ein Ausführungsbeispiel eines Bedienelementes für ein Kraftfahrzeug,

Fig. 3   einen Zusammenhang zwischen einer Leistung eines von einer Beleuchtungsvorrichtung abgegebenen Lichtes und einem Abstand zwischen einem Bediener und einem Annäherungssensor,

Fig. 4   einen weiteren Zusammenhang zwischen einer Leistung eines von einer Beleuchtungsvorrichtung abgegebenen Lichtes und einem Abstand zwischen einem Bediener und einem Annäherungssensor,

Fig. 5   einen weiteren Zusammenhang zwischen einer Leistung eines von einer Beleuchtungsvorrichtung abgegebenen Lichtes und einem Abstand zwischen einem Bediener und einem Annäherungssensor,

Fig. 6   einen weiteren Zusammenhang zwischen einer Leistung eines von einer Beleuchtungsvorrichtung abgegebenen Lichtes und einem Abstand zwischen einem Bediener und einem Annäherungssensor und

Fig. 7   Ausführungsbeispiele verschiedener Bedienelemente für ein Kraftfahrzeug.

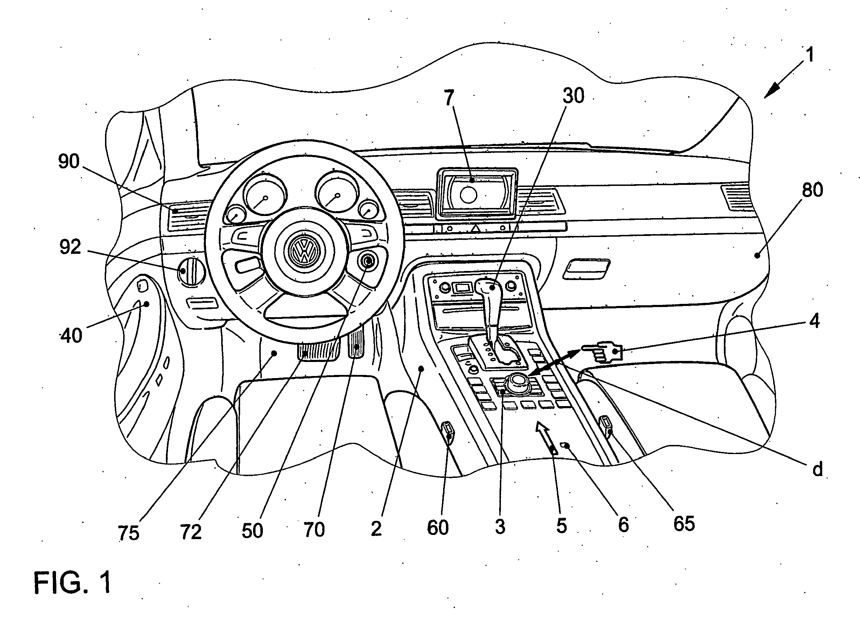

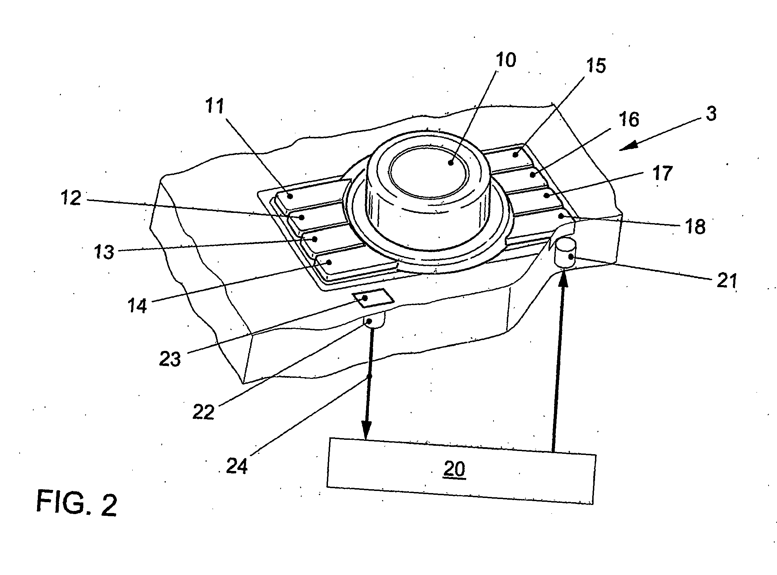

Fig. 1 zeigt ein Ausführungsbeispiel eines Kraftfahrzeuges 1 in einer Innenansicht. Das Kraftfahrzeug 1 umfasst ein in Fig. 2 detailliert dargestelltes und in einer Mittelkonsole 2 angeordnetes Bedienelement 3 zur Bedienung verschiedener Funktionen des Kraftfahrzeuges 1, wobei die Bedienung insbesondere in Verbindung mit einem Monitor 7 erfolgt. Das Bedienelement 3 umfasst im in Fig. 2 beschriebenen Ausführungsbeispiel einen Drehknopf 10 und neben dem Drehknopf 10 angeordnete Tasten 11, 12, 13, 14, 15, 16, 17, 18.

Dem Bedienelement 3 ist eine Beleuchtungsvorrichtung 21 zur Beleuchtung des Bedienelementes 3 zugeordnet. Eine solche Beleuchtungsvorrichtung 21 kann z.B. ein Leuchtelement, wie z.B. ein LED, oder eine Mehrzahl von (auch verteilt angeordneten) Leuchtelementen umfassen. Entsprechend kann vorgesehen sein, dass eine Beleuchtungsvorrichtung im Sinne der Erfindung ein Leuchtelement oder eine Mehrzahl von Leuchtelementen umfassen kann. Eine Mehrzahl von Leuchtelementen kann ggf. verteilt bzw. getrennt angeordnet sein. Die Beleuchtungsvorrichtung 21 kann- wie in Fig. 2 dargestellt unterhalb des Bedienelementes 3 angeordnet sein. Die Beleuchtungsvorrichtung 21 kann alternativ oder zusätzlich auch neben dem Bedienelement 3. angeordnet sein. Die Beleuchtungsvorrichtung 21 kann auch derart, z.B. im Dachhimmel, angeordnet sein, dass sie das Bedienelement 3 bestrahlen kann.

Dem Bedienelement 3 ist zudem ein Annäherungssensor 22 zur Erkennung einer Annäherung eines Bedieners 4 des Bedienelements 3 an das Bedienelement 3 bzw. den Annäherungssensor 22 und eine Beleuchtungssteuerung 20 zur Einstellung der Beleuchtungsvorrichtung 21 und damit der Beleuchtung des Bedienelementes 3 in Abhängigkeit eines Ausgangssignals 24 des Annäherungssensors 22 zugeordnet.

Im vorliegenden Ausführungsbeispiel ist der Annäherungssensor 22 unterhalb einer Abdeckung 23 angeordnet, die für Infrarotlicht nicht jedoch für Licht im sichtbaren Bereich transparent ist. Ein besonders geeigneter Annäherungssensor ist der in dem Artikel "Elektronikkonzept erfüllt Optiksensorträume" von F. Rottmann und E. Spiegel, Elektronik, 29.10.2002 beschriebene Abstandssensor HALIOS der Firma ELMOS. Weitere Einzelheiten dieses Sensors können der Internetseite

www.elmos.de/elmos/german/produc/halios.htm

entnommen werden. Der Annäherungssensor 22 kann einen Sensor oder eine Mehrzahl von getrennt angeordneten Sensoren umfassen. Entsprechend kann vorgesehen sein, dass ein Annäherungssensor im Sinne der Erfindung einen Sensor oder eine Mehrzahl von Sensoren umfassen kann.

Es kann vorgesehen sein, dass Beleuchtungsvorrichtungen und/oder Annäherungssensoren in den Drehknopf 10 und/oder die Tasten 11, 12, 13, 14, 15, 16, 17, 18 integriert sind.

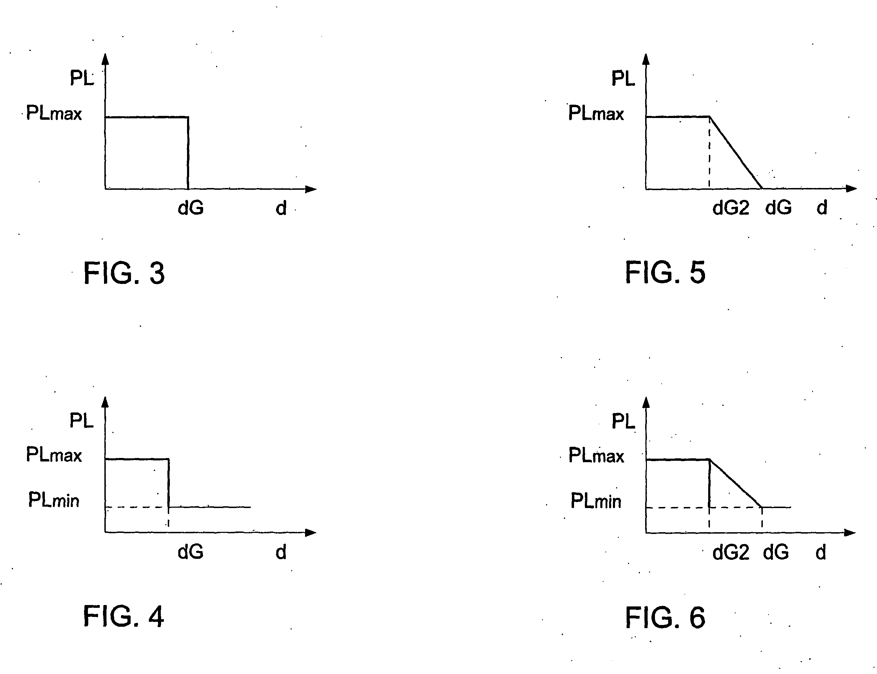

In einer möglichen - in Fig. 3 erläuterten - Ausgestaltung der Beleuchtungssteuerung 20 ist die Beleuchtungsvorrichtung 21 dadurch einschaltbar, dass ein Abstand d zwischen dem Annäherungssensor 22 und einem Bediener 4 einen Abstandsgrenzwert dG unterschreitet. Dabei bezeichnet PLmax die Leistung des von der Beleuchtungsvorrichtung 21 maximal abgegebenen Lichtes. Vergrößert sich der Abstand d zwischen dem Annäherungssensor 22 und dem Bediener 4 auf mehr als den Abstandsgrenzwert dG, so ist vorteilhafterweise vorgesehen, dass die Beleuchtungsvorrichtung 21 ausgeschaltet wird. Dies erfolgt vorteilhafterweise erst nach Ablauf einer Wartezeit, die vorteilhafterweise zwischen 1 s und 10s liegt.

In einer alternativen - in Fig. 4 erläuterten-Ausgestaltung der Beleuchtungssteuerung 20 ist die Beleuchtungsvorrichtung 21 in Sinne einer erhöhten Lichtabstrahlung dadurch einstellbar, dass der Abstand d zwischen dem Annäherungssensor 22 und dem Bediener 4 den Abstandsgrenzwert dG unterschreitet. Dabei kann vorgesehen sein, dass die Beleuchtungsvorrichtung 21, z.B. bei eingeschalteten Scheinwerfern, schwach mit einer Leistung PLmin leuchtet. Nähert sich der Bediener 4 dem Annäherungssensor 22 näher als den Abstandsgrenzwert dG, so kann vorgesehen sein, dass die Beleuchtungssteuerung 21 - durch entsprechende Ansteuerung der Beleuchtungssteuerung 20- heller leuchtet: Vergrößert sich der Abstand d zwischen dem Annäherungssensor 22 und dem Bediener 4 auf mehr als den Abstandsgrenzwert dG, so ist vorteilhafterweise vorgesehen, dass die Beleuchtungsvorrichtung 21 auf ihre vorherige reduzierte Lichtabgabe mit der Leistung PLmin eingestellt wird. Dies erfolgt vorteilhafterweise erst nach Ablauf einer Wartezeit, die vorteilhafterweise zwischen 1 s und 10s liegt.

In einer weiterhin alternativen Ausgestaltung der Beleuchtungssteuerung 20 ist die Beleuchtungsvorrichtung 21 derart einstellbar, dass sich die Lichtabstrahlung, insbesondere im wesentlichen kontinuierlich oder teilweise kontinuierlich, in Abhängigkeit des Abstandes d zwischen dem Bediener 4 und dem Annäherungssensor 22 ändert. Dies erfolgt vorteilhafterweise nur, wenn der Abstand d kleiner als der Abstandsgrenzwert dG ist. So kann z.B. vorgesehen sein, dass die Leistung PL des von der Beleuchtungsvorrichtung 21 abgegebenen Lichtes entsprechend den Zusammenhängen

$$PL \approx \left(PL\max - PL\min\right) \cdot \left(\frac{dG - d}{dG}\right) + PL\min, \ \textit{für} \ 0 \le d \le dG$$

$PL = PL\min, \ \textit{für } d > dG$
eingestellt werden kann.

Es kann z.B. auch vorgesehen sein, dass die Leistung PL des von der Beleuchtungsvorrichtung 21 abgegebenen Lichtes entsprechend den Zusammenhängen

$$PL \approx (PL\max - PL\min) \cdot \left( \frac{dG - d}{dG} \right) + PL\min, \text{ für } 0 \le d \le dG$$

$PL = 0, \text{ für } d > dG$

eingestellt werden kann.

Es kann aber z.B. auch vorgesehen sein, dass die Leistung PL des von der Beleuchtungsvorrichtung 21 abgegebenen Lichtes-entsprechend dem in Fig. 5 dargestellten Zusammenhang oder entsprechend dem in Fig. 6 dargestellten Zusammenhang eingestellt werden kann, wobei dG2 einen weiteren Abstandsgrenzwert bezeichnet.

Der Abstandsgrenzwert dG beträgt vorteilhafterweise im wesentlichen zwischen 10cm und 15cm. Der weitere Abstandsgrenzwert dG2 beträgt vorteilhafterweise im wesentlichen zwischen 2cm und 5cm.

Das Kraftfahrzeug 1 umfasst weiterhin optional eine, im vorliegenden Ausführungsbeispiel als beleuchtbarer Hinweispfeil ausgestaltete, Hinweisbeleuchtung 5 zur Deutung auf das Bedienelement 3 sowie einen der Hinweisbeleuchtung 5 zugeordneten Annäherungssensor 6 zur Erkennung einer Annäherung des Bedieners 4 an die Hinweisbeleuchtung 5 bzw. den Annäherungssensor 6. Die. Hinweisbeleuchtung 5 ist mittels der Beleuchtungssteuerung 20 oder einer weiteren Beleuchtungssteuerung in Abhängigkeit eines Ausgangssignals des der Hinweisbeleuchtung 5 zugeordneten Annäherungssensors 6 in analoger Weise steuerbar wie die Beleuchtungsvorrichtung 21. Statt wie im vorliegenden Ausführungsbeispiel als beleuchtbarer Hinweispfeil ausgestaltet kann die Hinweisbeleuchtung 5 auch als Lauflicht oder als weiteres Leuchtelement mit Hinweischarakter ausgestaltet sein.

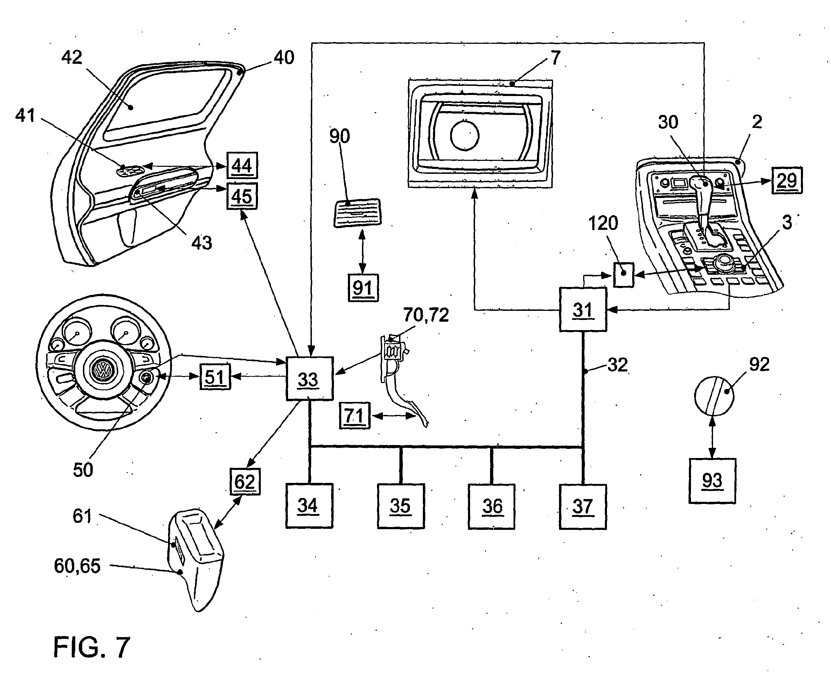

Fig. 7 zeigt Ausführungsbeispiele verschiedener Bedienelemente in dem Kraftfahrzeug 1, die optional in analoger Weise wie das Bedienelement 3 annäherungsgesteuert beleuchtet werden können. In Fig. 7 bezeichnet Bezugszeichen 31 eine Anzeigesteueruhg, die mittels eines Bussystem 32 datentechnisch mit einer Fahrzeugsteuerung 33, einem Navigationssystem 34, einer Klimalage 35, einem Telefon 36 und einem Infotainmentsystem 37 verbunden ist und mittels der der Monitor 7 durch Bedienung des Bedienelementes 3 gesteuert werden kann. Mittels des Monitors 7 und des Bedienelementes 3 können das Navigationssystem 34, die Klimalage 35, das Telefon 36 und das Infotainmentsystem 37 bedient werden.

Anstelle der Beleuchtungssteuerung 20 ist im vorliegenden Ausführungsbeispiel eine Beleuchtungssteuerung 120 zur Einstellung der Beleuchtungsvorrichtung 21 und damit der Beleuchtung des Bedienelementes 3 in Abhängigkeit des Ausgangssignals 24 des Annäherungssensors 22 zugeordnet, wobei dem Drehknopf 10 und jeder der Tasten 11, 12, 13, 14, 15,16,17,18 eine eigene Beleuchtungsvorrichtung zugeordnet ist. Dabei ist vorgesehen, dass der Drehknopf 10,und einzelne Tasten 11, 12, 13, 14, 15, 16, 17, 18 nur (ggf. hervorgehoben) beleuchtbar sind, wenn ihre Bedienung aufgrund des auf dem Monitor 7 dargestellten Menüs zugelassen ist. Dazu ist die Beleuchtungssteuerung 120 datentechnisch mit der Anzeigesteuerung 31 verbunden.

Bezugszeichen 30 in Fig. 1 und Fig. 7 bezeichnet einen Schalthebel. Dem Schalthebel 30 kann eine der Beleuchtungssteuerung 20 entsprechende Beleuchtungssteuerung 29 sowie ein nicht dargestellter dem Annäherungssensor 22 entsprechender Annäherungssensor und eine nicht dargestellte der Beleuchtungsvorrichtung 21 entsprechende Beleuchtungsvorrichtung zugeordnet sein.

Bezugszeichen 41 in Fig. 7 bezeichnet einen in einer Tür 40 angeordneten Fensterheber zum Herauf- und Herunterfahren eines in der Tür 40 angeordneten Fensters 42. Dem Fensterheber 41 kann eine der Beleuchtungssteuerung 20 entsprechende Beleuchtungssteuerung 44 sowie ein nicht dargestellter dem Annäherungssensor 22 entsprechender Annäherungssensor und eine nicht dargestellte der Beleuchtungsvorrichtung 21 entsprechende Beleuchtungsvorrichtung zugeordnet sein.

Bezugszeichen 43 in Fig. 7 bezeichnet einen Türentriegeler. Dem Türentriegeler 43 kann eine der Beleuchtungssteuerung 120 entsprechende Beleuchtungssteuerung 45 sowie ein nicht dargestellter dem Annäherungssensor 22 entsprechender Annäherungssensor und eine nicht dargestellte der Beleuchtungsvorrichtung 21 entsprechende Beleuchtungsvorrichtung zugeordnet sein. Dabei ist die nicht dargestellte Beleuchtungsvorrichtung des Türentriegelers 43 in Abhängigkeit eines Ausgangssignals des nicht dargestellten Annäherungssensors und in Abhängigkeit eines Betriebszustandes des Kraftfahrzeuges 1 steuerbar. Dazu ist die Beleuchtungssteuerung 45 datentechnisch mit der Fahrzeugsteuerung 33 verbunden. Es kann z.B. vorgesehen sein, dass die Beleuchtungsvorrichtung des Türentriegelers 43 nur dann die Lichtabstrahlung bei Annäherung des Bedieners 4 ändert, wenn ein Öffnen der Tür 40 zugelassen sein soll, also z.B. im Stillstand. Ein nicht dargestellter Türgriff der Tür 40 kann in analoger Weise wie der Türentriegeler 43 beleuchtbar sein.

Bezugszeichen 50 in Fig. 1 und Fig. 7 bezeichnet ein Zündschloss. Dem Zündschloss 50 kann eine der Beleuchtungssteuerung 120 entsprechende Beleuchtungssteuerung 51 sowie ein nicht dargestellter dem Annäherungssensor 22 entsprechender Annäherungssensor und eine nicht dargestellte der Beleuchtungsvorrichtung 21 entsprechende Beleuchtungsvorrichtung zugeordnet sein. Dabei ist die nicht dargestellte Beleuchtungsvorrichtung des Zündschlosses 50 in Abhängigkeit eines Ausgangssignals des nicht dargestellten Annäherungssensors und in Abhängigkeit eines Betriebszustandes des Kraftfahrzeuges 1 steuerbar. Dazu ist die Beleuchtungssteuerung 51 datentechnisch mit der Fahrzeugsteuerung 33 verbunden. Es kann z.B. vorgesehen sein, dass die Beleuhtungsvorrichtung des Zündschlosses 50 rot leuchtet, wenn sich ein Bediener 4 dem Zündschloss 50 bei steckendem Zündschlüssel nähert und der Schalthebel 30 nicht in der Position ‚P' ist. Es kann z.B. zusätzlich oder alternativ vorgesehen sein, dass die Beleuchtungsvorrichtung des Zündschlosses 50 grün leuchtet, wenn sich ein Bediener 4 dem Zündschloss 50 bei steckendem Zündschlüssel nähert und der Schalthebel 30 in der Position ‚P' ist und/oder wenn kein Zündschlüssel steckt.

Bezugszeichen 60 und 65 in Fig. 1 und Fig. 7 bezeichnen Sicherheitsgurtschlösser. Den Sicherheitsgurtschlössern 60, 65 bzw. dem Sicherheitsgurtentriegler 61 kann eine der Beleuchtungssteuerung 120 entsprechende Beleuchtungssteuerung 62 sowie ein nicht dargestellter dem Annäherungssensor 22 entsprechender Annäherungssensor und eine nicht dargestellte der Beleuchtungsvorrichtung 21 entsprechende Beleuchtungsvorrichtung zugeordnet sein. Dabei ist die nicht dargestellte Beleuchtungsvorrichtung der Sicherheitsgurtschlösser 60, 65 bzw. des Sicherheitsgurtentrieglers 61 in Abhängigkeit eines Ausgangssignals des nicht dargestellten Annäherungssensors und in Abhängigkeit eines Betriebszustandes des Kraftfahrzeuges 1 steuerbar. Dazu ist die Beleuchtungssteuerung 62 datentechnisch mit der Fahrzeugsteuerung 33 verbunden. Es kann z.B. vorgesehen sein, dass die Beleuchtungsvorrichtung der Sicherheitsgurtschlösser 60, 65 bzw. des Sicherheitsgurtentrieglers 61 dann die Lichtabstrahlung bei Ännäherung des Bedieners 4 ändert, wenn der Motor des Kraftfahrzeuges 1 ausgestellt wird.

Bezugszeichen 70 und 72 in Fig. 1 und Fig. 7 bezeichnen Pedale. Den Pedalen 70 und 72 kann eine der Beleuchtungssteuerung 20 entsprechende Beleuchtungssteuerung 71 sowie ein nicht dargestellter dem Annäherungssensor 22 entsprechender Annäherungssensor und eine nicht dargestellte der Beleuchtungsvorrichtung 21 entsprechende Beleuchtungsvorrichtung zugeordnet sein.

Bezugszeichen 90 in Fig. 1 und Fig. 7 bezeichnet eine einstellbare Luftauslassdüse. Der Luftauslassdüse 90 kann eine der Beleuchtungssteuerung 20 entsprechende Beleuchtungssteuerung 91 sowie ein nicht dargestellter dem Annäherungssensor 22 entsprechender Annäherungssensor und eine nicht dargestellte der Beleuchtungsvorrichtung 21 entsprechende Beleuchtungsvorrichtung zugeordnet sein.

Bezugszeichen 92 in Fig. 1 und Fig. 7 bezeichnet einen Lichtschalter. Dem Lichtschalter 92 kann eine der Beleuchtungssteuerung 20 entsprechende Beleuchtungssteuerung 93 sowie ein nicht dargestellter dem Annäherungssensor 22 entsprechender Annäherungssensor und eine nicht dargestellte der Beleuchtungsvorrichtung 21 entsprechende Beteuchtungsvorrichtung zugeordnet sein.

Der Fensterheber 41, der Türentriegeler 43, der Sicherheitsgurtentriegler 61 bzw. die Sicherheitsgurtschlösser 60, 65, die Pedale 70, 72, die Luftauslassdüse 90, der Lichtschalter 92 und das Zündschloss 50 sind Beispiele für ein Bedienelement im Sinne der Ansprüche.

Es kann zudem vorgesehen sein, dass Ablagefächern, dem Fußraum 75 und/der dem Handschuhfach 80 eine der Beleuchtungssteuerung 20 entsprechende Beleuchtungssteuerung sowie ein dem Annäherungssensor 22 entsprechender Annäherungssensor und eine der Beleuchtungsvorrichtung 21 entsprechende Beleuchtungsvorrichtung zugeordnet sein kann.

**Bezugszeichenliste**

| | |
|---|---|
| 1 | Kraftfahrzeug |
| 2 | Mittelkonsole |
| 3 | Bedienelement |
| 4 | Bediener |
| 5 | Hinweisbeleuchtung |
| 6, 22 | Annäherungssensor |
| 7 | Monitor |
| 10 | Drehknopf |
| 11, 12, 13; 14, 15, 16, 17, 18 | Taste |
| 20, 29, 44, 45, 51,62,71,91, 93, 120 | Beleuchtungssteuerung |
| 21 | Beleuchtungsvorrichtung |
| 23 | Abdeckung |
| 24 | Ausgangssignal |
| 30 | Schalthebel |
| 31 | Anzeigesteuerung |
| 32 | Bussystem |
| 33 | Fahrzeugsteuerung |
| 34 | Navigationssystem |

| | |
|---|---|
| 35 | Klimalage |
| 36 | Telefon |
| 37 | Infotianmentsystem |
| 40 | Tür |
| 41 | Fensterheber |
| 42 | Fenster |
| 43 | Türentriegeler |
| 50 | Zündschloss |
| 60,65 | Sicherheitsgurtschloss |
| 61 | Sicherheitsgurtentriegler |
| 70, 72 | Pedal |
| 75 | Fußraum |
| 80 | Handschuhfach |
| 90 | Luftauslassdüse |
| 92 | Lichtschalter |

| | |
|---|---|
| d | Abstand |
| dG, dG2 | Abstandsgrenzwert |
| PL, PLmin, PLmax | Leistung |

**Patentansprüche**

1. Bedienelement (3, 10, 11, 12, 13, 14, 15, 16, 17, 18, 30, 41, 43, 50, 60, 61, 65, 70, 72, 90, 92) für ein Kraftfahrzeug (1) zur Bedienung einer Funktion des Kraftfahrzeuges (1), insbesondere durch Drücken auf das Bedienelement (3, 10, 11, 12, 13, 14, 15, 16, 17, 18, 30, 41, 43, 50, 60, 61, 65, 70, 72, 90, 92), Berühren des Bedienelementes (3, 10, 11, 12, 13, 14, 15, 16, 17, 18, 30, 41, 43, 50, 60, 61, 65, 70, 72, 90, 92), Drehen des Bedienelementes (3, 10, 11, 12, 13, 14, 15, 16, 17, 18, 30, 41, 43, 50, 60, 61, 65, 70, 72, 90, 92) und/oder Ziehen des Bedienelementes (3, 10, 11, 12, 13, 14, 15, 16, 17, 18, 30, 41, 43, 50, 60, 61, 65, 70, 72, 90, 92), wobei dem Bedienelement (3, 10, 11, 12, 13, 14, 15, 16, 17, 18, 30, 41, 43, 50, 60, 61, 65, 70, 72, 90, 92) eine Beleuchtungsvorrichtung (21) zugeordnet ist, wobei dem Bedienelement (3, 10, 11, 12, 13, 14, 15, 16, 17, 18, 30, 41, 43, 50, 60, 61, 65, 70, 72, 90, 92) ein Annäherungssensor (22) zur Erkennung einer Annäherung eines Bedieners (4) des Bedienelementes (3, 10, 11, 12, 13, 14, 15, 16, 17, 18, 30, 41, 43, 50, 60, 61, 85, 70, 72, 90, 92) und eine Beleuchtungssteuerung (20, 29, 44, 45, 51, 62, 71, 91, 93, 120) zugeordnet sind **dadurch gekennzeichnet, dass** die Beleuchtungsvorrichtung (21) zur Beleuchtung des Bedienelementes (3, 10, 11, 12, 13, 14, 15, 16, 17, 18, 30, 41, 43, 50, 60, 61, 65, 70, 72, 90, 92) und die Beleuchtungssteuerung (20, 29, 44, 45, 51, 62, 71, 91, 93, 120) zur Einstellung der Beleuchtung des Bedienelementes (3, 10, 11, 12, 13, 14, 15, 16, 17, 18, 30, 41, 43, 50, 60, 61, 65, 70, 72, 90, 92) in Abhängigkeit eines Ausgangssignals (24) des Annäherungssensors (22) ausgebildet sind.

2. Bedienelement (3, 10, 11, 12, 13, 14, 15, 16, 17, 18, 30, 41, 43, 50, 60, 61, 65, 70, 72, 90, 92) nach Anspruch 1, **dadurch gekennzeichnet, dass** die Beleuchtungsvorrichtung (21) mittels der Beleuchtungssteuerung (20, 29, 44, 45, 51, 62, 71, 91, 93, 120) dadurch einschaltbar ist, dass ein Abstand (d) zwischen dem Annäherungssensor (22) und einem Bediener (4) einen Abstandsgrenzwert (dG) unterschreitet.

3. Bedienelement (3, 10, 11, 12, 13, 14, 1-5, 16, 17, 18, 30, 41, 43, 50, 60, 61, 65, 70, 72, 90, 92) nach Anspruch 1 oder 2, **dadurch gekennzeichnet, dass** die Beleuchtungsvorrichtung (21) mittels der Beleuchtungssteuerung (20, 29, 44, 45, 51, 62, 71, 91, 93, 120) in Sinne einer erhöhten Lichtabstrahlung **dadurch** einstellbar ist, dass ein Abstand (d) zwischen dem Annäherungssensor (22) und einem Bediener (4) einen Abstandsgrenzwert (dG) unterschreitet.

4. Bedienelement (3, 10, 11, 12, 13, 14, 15, 16, 17, 18, 30, 41, 43, 50, 60, 61, 65, 70, 72, 90, 92) nach Anspruch 2 oder 3, **dadurch gekennzeichnet, dass** der Abstandsgrenzwert (dG) im wesentlichen zwischen 5cm und 15cm liegt.

5. Bedienelement nach einem der vorhergehenden Ansprüche, **dadurch gekennzeichnet, dass** das Bedienelement einen Drehknopf (10) umfasst.

6. Bedienelement nach einem der vorhergehenden Ansprüche, **dadurch gekennzeichnet, dass** das Bedienelement eine Taste (11, 12, 13, 14, 15, 16, 17, 18) umfasst.

7. Bedienelement nach einem der vorhergehenden Ansprüche, **dadurch gekennzeichnet, dass** das Bedienelement einen Fensterheber (41) umfasst.

8. Bedienelement nach einem der vorhergehenden Ansprüche, **dadurch gekennzeichnet, dass** das Bedienelement einen Türentriegeler (43) umfasst.

9. Bedienelement nach einem der vorhergehenden Ansprüche, **dadurch gekennzeichnet, dass** das Bedienelement einen Türgriff umfasst.

10. Bedienelement nach einem der vorhergehenden Ansprüche, **dadurch gekennzeichnet, dass** das Bedienelement einen Sicherheitsgurtentriegeler (61) umfasst.

11. Bedienelement nach einem der vorhergehenden Ansprüche, **dadurch gekennzeichnet, dass** das Bedienelement ein Sicherheitsgurtschloss (60, 65) umfasst.

12. Bedienelement nach einem der vorhergehenden Ansprüche, **dadurch gekennzeichnet, dass** das Bedienelement ein Pedal (70, 72) umfasst.

13. Bedienelement nach einem der vorhergehenden Ansprüche, **dadurch gekennzeichnet, dass** das Bedienelement ein Zündschloss (50) umfasst.

14. Kraftfahrzeug (1), **dadurch gekennzeichnet, dass** es ein Bedienelement (3, 10, 11, 12, 13, 14, 15, 16, 17, 18, 30, 41, 43, 50, 60, 61, 65, 70, 72, 90, 92) nach einem der vorhergehenden Ansprüche aufweist.

15. Kraftfahrzeug (1) nach Anspruch 14, **dadurch gekennzeichnet, dass** die Beleuchtungsvorrichtung (21) mittels der Beleuchtungssteuerung (20, 29, 44, 45, 51, 62, 71, 91, 93, 120) in Abhängigkeit eines Betriebszustandes des Kraftfahrzeuges (1) steuerbar ist.

16. Kraftfahrzeug (1) nach Anspruch 14 oder 15, **dadurch gekennzeichnet, dass** die Beleuchtungsvorrichtung (21) mittels der Beleuchtungssteuerung (20, 29, 44, 45, 51, 62, 71, 91, 93, 120) **dadurch** einschaltbar ist, dass ein Abstand (d) zwischen dem Annäherungssensor (22) und einem Bediener (4) einen Abstandsgrenzwert (dG) unterschreitet, sofern eine Bedienung des Bedienelementes (3, 10, 11, 12, 13, 14, 15, 16, 17, 18, 30, 41, 43, 50, 60, 61, 65, 70, 72, 90, 92) zugelassen ist.

17. Kraftfahrzeug (1) nach Anspruch 14, 15 oder 16, **dadurch gekennzeichnet, dass** die Beleuchtungsvorrichtung (21) mittels der Beleuchtungssteuerung (20, 29, 44, 45, 51, 62, 71, 91, 93, 120) in Sinne einer erhöhten Lichtabstrahlung **dadurch** einstellbar ist, dass ein Abstand (d) zwischen dem Annäherungssensor (22) und einem Bediener (4) einen Abstandsgrenzwert (dG) unterschreitet, sofern eine Bedienung des Bedienelementes (3, 10, 11, 12, 13, 14, 15, 16, 17, 18, 30, 41, 43, 50, 60, 61, 65, 70, 72, 90, 92) zugelassen ist.

18. Kraftfahrzeug (1) nach einem der Ansprüche 14 bis 17, **dadurch gekennzeichnet, dass** mittels der Beleuchtungsvorrichtung (21) in Abhängigkeit eines Betriebszustandes des Kraftfahrzeuges (1) Licht in zumindest zwei unterschiedlichen Farben erzeugbar ist.

19. Kraftfahrzeug (1) nach einem der Ansprüche 14 bis 18, **dadurch gekennzeichnet, dass** es eine Hinweisbeleuchtung (5) zur Deutung auf das Bedienelement (3, 10, 11, 12, 13, 14, 15, 16, 17, 18) und einen der Hinweisbeleuchtung (5) zugeordneten Annäherungssensor (6) zur Erkennung einer Annäherung eines Bedieners (4) an die Hinweisbeleuchtung (5) aufweist, wobei die Hinweisbeleuchtung (5) in Abhängigkeit eines Ausgangssignals des der Hinweisbeleuchtung (5) zugeordneten Annäherungssensors (6) steuerbar ist

20. Kraftfahrzeug (1) nach Anspruch 19, **dadurch gekennzeichnet, dass** die Hinweisbeleuchtung (5) oder ein Teil der Hinweisbeleuchtung (5) mehr als in etwa 10cm von dem Bedienelement (3, 10, 11, 12, 13, 14, 15, 16, 17, 18) entfernt angeordnet ist.

21. Kraftfahrzeug (1) nach Anspruch 19 oder 20, **dadurch gekennzeichnet, dass** der der Hinweisbeleuchtung (5) zugeordnete Annäherungssensor (22) mehr als in etwa 10cm von dem Bedienelement (3, 10, 11, 12, 13, 14, 15, 16, 17, 18) entfernt angeordnet ist.

**Claims**

1.  Operating element (3, 10, 11, 12, 13, 14, 15, 16, 17, 18, 30, 41, 43, 50, 60, 61, 65, 70, 72, 90, 92) for a motor vehicle (1) for controlling a function of the motor vehicle (1), in particular by pressing on the operating element (3, 10, 11, 12, 13, 14, 15, 16, 17, 18, 30, 41, 43, 50, 60, 61, 65, 70, 72, 90, 92), touching the operating element (3, 10, 11, 12, 13, 14, 15, 16, 17, 18, 30, 41, 43, 50, 60, 61, 65, 70, 72, 90, 92), rotating the operating element (3, 10, 11, 12, 13, 14, 15, 16, 17, 18, 30, 41, 43, 50, 60, 61, 65, 70, 72, 90, 92) and/or pulling the operating element (3, 10, 11, 12, 13, 14, 15, 16, 17, 18, 30, 41, 43, 50, 60, 61, 65, 70, 72, 90, 92), wherein a lighting device (21) is assigned to the operating element (3, 10, 11, 12, 13, 14, 15, 16, 17, 18, 30, 41, 43, 50, 60, 61, 65, 70, 72, 90, 92), and wherein a proximity sensor (22) for detecting an operator (4) approaching the operating element (3, 10, 11, 12, 13, 14, 15, 16, 17, 18, 30, 41, 43, 50, 60, 61, 65, 70, 72, 90, 92) and a lighting controller (20, 29, 44, 45, 51, 62, 71, 91, 93, 120) are assigned to the operating element (3, 10, 11, 12, 13, 14, 15, 16, 17, 18, 30, 41, 43, 50, 60, 61, 65, 70, 72, 90, 92), **characterized in that** the lighting device (21) for lighting the operating element (3, 10, 11, 12, 13, 14, 15, 16, 17, 18, 30, 41, 43, 50, 60, 61, 65, 70, 72, 90, 92) and the lighting controller (20, 29, 44, 45, 51, 62, 71, 91, 93, 120) are designed for setting the lighting of the operating element (3, 10, 11, 12, 13, 14, 15, 16, 17, 18, 30, 41, 43, 50, 60, 61, 65, 70, 72, 90, 92) as a function of an output signal (24) of the proximity sensor (22).

2.  Operating element (3, 10, 11, 12, 13, 14, 15, 16, 17, 18, 30, 41, 43, 50, 60, 61, 65, 70, 72, 90, 92) according to Claim 1, **characterized in that** the lighting device (21) can be switched on by means of the lighting controller (20, 29, 44, 45, 51, 62, 71, 91, 93, 120) in such a way that a distance (d) between the proximity sensor (22) and an operator (4) drops below a distance limiting value (dG).

3.  Operating element (3, 10, 11, 12, 13, 14, 15, 16, 17, 18, 30, 41, 43, 50, 60, 61, 65, 70, 72, 90, 92) according to Claim 1 or 2, **characterized in that** the lighting device (21) can be switched on by means of the lighting controller (20, 29, 44, 45, 51, 62, 71, 91, 93, 120) with the effect of bringing about increased light irradiation as a result of a distance (d) between the proximity sensor (22) and an operator (4) dropping below a distance limiting value (dG).

4.  Operating element (3, 10, 11, 12, 13, 14, 15, 16, 17, 18, 30, 41, 43, 50, 60, 61, 65, 70, 72, 90, 92) according to Claim 2 or 3, **characterized in that** the distance limiting value (dG) is essentially between 5 cm and 15 cm.

5.  Operating element according to one of the preceding claims, **characterized in that** the operating element comprises a rotary knob (10).

6.  Operating element according to one of the preceding claims, **characterized in that** the operating element comprises a pushbutton key (11, 12, 13, 14, 15, 16, 17, 18).

7.  Operating element according to one of the preceding claims, **characterized in that** the operating element comprises a window lifter (41).

8.  Operating element according to one of the preceding claims, **characterized in that** the operating element comprises a door release element (43).

9.  Operating element according to one of the preceding claims, **characterized in that** the operating element comprises a door handle.

10. Operating element according to one of the preceding claims, **characterized in that** the operating element comprises a seat belt release element (61).

11. Operating element according to one of the preceding claims, **characterized in that** the operating element comprises a seat belt lock (60, 65).

12. Operating element according to one of the preceding claims, **characterized in that** the operating element comprises a pedal (70, 72).

13. Operating element according to one of the preceding claims, **characterized in that** the operating element comprises an ignition lock (50).

14. Motor vehicle (1) **characterized in that** it has an operating element (3, 10, 11, 12, 13, 14, 15, 16, 17, 18, 30, 41, 43, 50, 60, 61, 65, 70, 72, 90, 92) according to one of the preceding claims.

**15.** Motor vehicle (1) according to Claim 14, **characterized in that** the lighting device (21) can be controlled by means of the lighting controller (20, 29, 44, 45, 51, 62, 71, 91, 93, 120) as a function of an operating state of the motor vehicle (1).

**16.** Motor vehicle (1) according to Claim 14 or 15, **characterized in that** the lighting device (21) can be switched on means of the lighting controller (20, 29, 44, 45, 51, 62, 71, 91, 93, 120) as a result of a distance (d) between the proximity sensor (22) and an operator (4) dropping below a distance limiting value (dG) provided that control of the operating element (3, 10, 11, 12, 13, 14, 15, 16, 17, 18, 30, 41, 43, 50, 60, 61, 65, 70, 72, 90, 92) is permitted.

**17.** Motor vehicle (1) according to Claim 14, 15 or 16, **characterized in that** the lighting device (21) can be adjusted by means of the lighting controller (20, 29, 44, 45, 51, 62, 71, 91, 93, 120) with the effect of bringing about increased light irradiation as a result of a distance (d) between the proximity sensor (22) and an operator (4) dropping below a distance limiting value (dG) provided that control of the operating element (3, 10, 11, 12, 13, 14, 15, 16, 17, 18, 30, 41, 43, 50, 60, 61, 65, 70, 72, 90, 92) is permitted.

**18.** Motor vehicle (1) according to one of Claims 14 to 17, **characterized in that** light can be generated in at least two different colours by means of the lighting device (21) as a function of an operating state of the motor vehicle (1).

**19.** Motor vehicle (1) according to one of Claims 14 to 18, **characterized in that** said motor vehicle (1) has an indication light (5) for indicating the operating element (3, 10, 11, 12, 13, 14, 15, 16, 17, 18) and a proximity sensor (6) which is assigned to the indication light (5) and has the purpose of detecting an operator (4) approaching the indication light (5), wherein the indication light (5) can be controlled as a function of an output signal of the proximity sensor (6) which is assigned to the indication light (5).

**20.** Motor vehicle (1) according to Claim 19, **characterized in that** the indication light (5) or a part of the indication light (5) is arranged at a distance of more than approximately 10 cm from the operating element (3, 10, 11, 12, 13, 14, 15, 16, 17, 18).

**21.** Motor vehicle (1) according to Claim 19 or 20, **characterized in that** the proximity sensor (22) which is assigned to the indication light (5) is arranged at a distance of approximately more than 10 cm from the operating element (3, 10, 11, 12, 13, 14, 15, 16, 17, 18).

## Revendications

**1.** Élément de commande (3, 10, 11, 12, 13, 14, 15, 16, 17, 18, 30, 41, 43, 50, 60, 61, 65, 70, 72, 90, 92) pour un véhicule automobile (1) destiné à commander une fonction du véhicule automobile (1), notamment par une pression sur l'élément de commande (3, 10, 11, 12, 13, 14, 15, 16, 17, 18, 30, 41, 43, 50, 60, 61, 65, 70, 72, 90, 92), par un contact avec l'élément de commande (3, 10, 11, 12, 13, 14, 15, 16, 17, 18, 30, 41, 43, 50, 60, 61, 65, 70, 72, 90, 92), en tournant l'élément de commande (3, 10, 11, 12, 13, 14, 15, 16, 17, 18, 30, 41, 43, 50, 60, 61, 65, 70, 72, 90, 92) et/ou en tirant l'élément de commande (3, 10, 11, 12, 13, 14, 15, 16, 17, 18, 30, 41, 43, 50, 60, 61, 65, 70, 72, 90, 92), un dispositif d'éclairage (21) étant associé à l'élément de commande (3, 10, 11, 12, 13, 14, 15, 16, 17, 18, 30, 41, 43, 50, 60, 61, 65, 70, 72, 90, 92), un détecteur d'approche (22) destiné à détecter une approche d'un opérateur (4) de l'élément de commande (3, 10, 11, 12, 13, 14, 15, 16, 17, 18, 30, 41, 43, 50, 60, 61, 65, 70, 72, 90, 92) ainsi qu'une commande d'éclairage (20, 29, 44, 45, 51, 62, 71, 91, 93, 120) étant associés à l'élément de commande (3, 10, 11, 12, 13, 14, 15, 16, 17, 18, 30, 41, 43, 50, 60, 61, 65, 70, 72, 90, 92), **caractérisé en ce que** le dispositif d'éclairage (21) est configuré pour l'éclairage de l'élément de commande (3, 10, 11, 12, 13, 14, 15, 16, 17, 18, 30, 41, 43, 50, 60, 61, 65, 70, 72, 90, 92) et la commande d'éclairage (20, 29, 44, 45, 51, 62, 71, 91, 93, 120) pour régler l'éclairage de l'élément de commande (3, 10, 11, 12, 13, 14, 15, 16, 17, 18, 30, 41, 43, 50, 60, 61, 65, 70, 72, 90, 92) en fonction d'un signal de sortie (24) du détecteur d'approche (22).

**2.** Élément de commande (3, 10, 11, 12, 13, 14, 15, 16, 17, 18, 30, 41, 43, 50, 60, 61, 65, 70, 72, 90, 92) selon la revendication 1, **caractérisé en ce que** le dispositif d'éclairage (21) peut être mis en marche au moyen de la commande d'éclairage (20, 29, 44, 45, 51, 62, 71, 91, 93, 120) par le fait qu'un écart (d) entre le détecteur d'approche (22) et un opérateur (4) devient inférieur à une valeur limite d'écart (dG).

**3.** Élément de commande (3, 10, 11, 12, 13, 14, 15, 16, 17, 18, 30, 41, 43, 50, 60, 61, 65, 70, 72, 90, 92) selon la revendication 1 ou 2, **caractérisé en ce que** le dispositif d'éclairage (21) peut être réglé au moyen de la commande d'éclairage (20, 29, 44, 45, 51, 62, 71, 91, 93, 120) dans le sens d'un rayonnement lumineux accru par le fait qu'un écart (d) entre le détecteur d'approche (22) et un opérateur (4) devient inférieur à une valeur limite d'écart (dG).

**4.** Élément de commande (3, 10, 11, 12, 13, 14, 15, 16, 17, 18, 30, 41, 43, 50, 60, 61, 65, 70, 72, 90, 92) selon la revendication 2 ou 3, **caractérisé en ce que** la valeur limite d'écart (dG) est pour l'essentiel comprise entre 5 cm et 15 cm.

**5.** Élément de commande selon l'une des revendications précédentes, **caractérisé en ce que** l'élément de commande comprend un bouton (10).

**6.** Élément de commande selon l'une des revendications précédentes, **caractérisé en ce que** l'élément de commande comprend une touche (11, 12, 13, 14, 15, 16, 17, 18).

**7.** Élément de commande selon l'une des revendications précédentes, **caractérisé en ce que** l'élément de commande comprend un lève-vitre (41).

**8.** Élément de commande selon l'une des revendications précédentes, **caractérisé en ce que** l'élément de commande comprend un dispositif de déverrouillage de portière (43).

**9.** Élément de commande selon l'une des revendications précédentes, **caractérisé en ce que** l'élément de commande comprend une poignée de portière.

**10.** Élément de commande selon l'une des revendications précédentes, **caractérisé en ce que** l'élément de commande comprend un dispositif de déverrouillage de ceinture de sécurité (61).

**11.** Élément de commande selon l'une des revendications précédentes, **caractérisé en ce que** l'élément de commande comprend un fermoir de ceinture de sécurité (60, 65).

**12.** Élément de commande selon l'une des revendications précédentes, **caractérisé en ce que** l'élément de commande comprend une pédale (70, 72).

**13.** Élément de commande selon l'une des revendications précédentes, **caractérisé en ce que** l'élément de commande comprend une serrure de contact (50).

**14.** Véhicule automobile (1), **caractérisé en ce qu'**il présente un élément de commande (3, 10, 11, 12, 13, 14, 15, 16, 17, 18, 30, 41, 43, 50, 60, 61, 65, 70, 72, 90, 92) selon l'une des revendications précédentes.

**15.** Véhicule automobile (1) selon la revendication 14, **caractérisé en ce que** le dispositif d'éclairage (21) peut être commandé au moyen de la commande d'éclairage (20, 29, 44, 45, 51, 62, 71, 91, 93, 120) en fonction de l'état opérationnel du véhicule automobile (1).

**16.** Véhicule automobile (1) selon la revendication 14 ou 15, **caractérisé en ce que** le dispositif d'éclairage (21) peut être mis en marche au moyen de la commande d'éclairage (20, 29, 44, 45, 51, 62, 71, 91, 93, 120) par le fait qu'un écart (d) entre le détecteur d'approche (22) et un opérateur (4) devient inférieur à une valeur limite d'écart (dG), sous réserve qu'une utilisation de l'élément de commande (3, 10, 11, 12, 13, 14, 15, 16, 17, 18, 30, 41, 43, 50, 60, 61, 65, 70, 72, 90, 92) est autorisée.

**17.** Véhicule automobile (1) selon la revendication 14, 15 ou 16, **caractérisé en ce que** le dispositif d'éclairage (21) peut être réglé au moyen de la commande d'éclairage (20, 29, 44, 45, 51, 62, 71, 91, 93, 120) dans le sens d'un rayonnement lumineux accru par le fait qu'un écart (d) entre le détecteur d'approche (22) et un opérateur (4) devient inférieur à une valeur limite d'écart (dG), sous réserve qu'une utilisation de l'élément de commande (3, 10, 11, 12, 13, 14, 15, 16, 17, 18, 30, 41, 43, 50, 60, 61, 65, 70, 72, 90, 92) est autorisée.

**18.** Véhicule automobile (1) selon l'une des revendications 14 à 17, **caractérisé en ce que** le dispositif d'éclairage (21) permet de générer de la lumière dans au moins deux couleurs différentes en fonction d'un état opérationnel du véhicule automobile (1)

**19.** Véhicule automobile (1) selon l'une des revendications 14 à 18, **caractérisé en ce qu'**il présente un éclairage de notification (5) pour montrer l'élément de commande (3, 10, 11, 12, 13, 14, 15, 16, 17, 18) et un détecteur d'approche (6) associé à l'éclairage de notification (5) pour détecter l'approche d'un opérateur (4) de l'éclairage de notification (5), l'éclairage de notification (5) pouvant être commandé en fonction d'un signal de sortie du détecteur d'approche (6) associé à l'éclairage de notification (5).

**20.** Véhicule automobile (1) selon la revendication 19, **caractérisé en ce** l'éclairage de notification (5) ou une partie de l'éclairage de notification (5) est disposé à une distance supérieure à environ 10 cm de l'élément de commande (3, 10, 11, 12, 13, 14, 15, 16, 17, 18).

**21.** Véhicule automobile (1) selon la revendication 19 ou 20, **caractérisé en ce** le détecteur d'approche (22) associé à l'éclairage de notification (5) est disposé à une distance supérieure à environ 10 cm de l'élément de commande (3, 10, 11, 12, 13, 14, 15, 16, 17, 18).

FIG. 1

EP 1 794 021 B1

FIG. 2

EP 1 794 021 B1

FIG. 3

FIG. 4

FIG. 5

FIG. 6

FIG. 7

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 0021795 A
- DE 10139693 A1
- EP 0366132 B1
- DE 19941960 A1
- DE 10015726 A1

- EP 1406160 A2
- DE 3104384 A1
- EP 0329920 A1
- EP 0771681 A2

**In der Beschreibung aufgeführte Nicht-Patentliteratur**

- **F. Rottmann ; E. Spiegel.** Elektronikkonzept erfüllt Optiksensorträume. *Elektronik,* 29. Oktober 2002